# EUROPÄISCHE PATENTSCHRIFT

(11) **EP 3 628 148 B1**
(45) Veröffentlichungstag und Bekanntmachung des Hinweises auf die Patenterteilung: **30.06.2021**
(21) Anmeldenummer: 19199188.4
(22) Anmeldetag: 24.09.2019
(51) Int. Cl.: A01K 1/015

(54) **VERFAHREN ZUR HERSTELLUNG EINES EINSTREUZUSATZES FÜR DIE TIERHALTUNG, UND EINSTREUZUSATZ FÜR DIE TIERHALTUNG**
METHOD FOR MANUFACTURING A BEDDING ADDITIVE FOR ANIMAL HUSBANDRY, AND BEDDING ADDITIVE FOR ANIMAL HUSBANDRY
MÉTHODE DE FABRICATION D'UN ADDITIF DE LITIÈRE POUR L'ÉLEVAGE, ET ADDITIF DE LITIÈRE POUR L'ÉLEVAGE

(30) Priorität: 27.09.2018 DE 102018123912
(43) Veröffentlichungstag der Anmeldung: 01.04.2020
(73) Patentinhaber: EF Energy Farming AG, 3652 Hilterfingen (CH)
(72) Erfinder: GALLIN-AST, Hannelore, 85253 Happach-Erdweg (DE)
(74) Vertreter: PATERIS Patentanwälte PartmbB

(56) Entgegenhaltungen:
- CN-A- 108 243 971
- DE-A1-102005 057 348
- DE-A1-102008 039 763
- DE-T2- 69 915 013
- US-A1- 2018 007 861

## Beschreibung

### Gebiet der Erfindung

Die Offenbarung betrifft einen Einstreuzusatz für die Tierhaltung, wobei der Einstreuzusatz Fasern von Miscanthus, Napiergras und/oder Rutenhirse aufweist, und wobei der Einstreuzusatz weiter Fasern von Pflanzenkohle aufweist. Die Offenbarung betrifft weiter eine Einstreu mit dem Einstreuzusatz, ein erfindungsgemäßes Verfahren zur Herstellung des Einstreuzusatzes und einen erfindungsgemäßen Einstreuzusatz, der durch das Verfahren erhältlich ist. Die Erfindung betrifft weiter verschiedene Verwendungen des Einstreuzusatzes.

### Hintergrund der Erfindung

In der Tierhaltung dient Einstreu zum Abdecken des Bodens in Stallungen und Käfigen, um die Ausscheidungen der Tiere wie Urin und Kot aufzunehmen. Zur Herstellung der Einstreu werden verschiedene organische faserige Materialien wie beispielsweise Stroh, Hanf und Holzspäne sowie mineralische Materialien verwendet. Auch Mischungen von verschiedenen Materialien sind zur Herstellung von Einstreu verbreitet. Für die Großtierhaltung, insbesondere die Pferdehaltung, werden die Materialien meist zu Pellets gepresst und in dieser Form als Einstreu verwendet.

Für die Auswahl eines geeigneten Einstreumaterials spielt neben Größe und Art des Tieres vor allem die Adsorptionsfähigkeit der Einstreu für Flüssigkeiten, Geruchs- und Schadstoffe, die Reduzierung der Wärmebildung in Stallungen sowie die Reduzierung der Staubentwicklung eine wichtige Rolle. Fäulnis, Schimmelbildung und Schädlingsbesiedelung sollen vermieden werden. Des Weiteren ist die Bildung eines stabilen, rutschfesten und trockenen Belags, der für die Lauf- und Liegeeigenschaften der Einstreu wesentlich ist, erforderlich. Auch der Zeitraum bis zur notwendigen Erneuerung der Einstreu ist von Bedeutung, da dieser die Wirtschaftlichkeit der Stallungen mitbestimmt. Außerdem soll die Einstreu dazu geeignet sein, nach Gebrauch, wenn sie mit tierischen Ausscheidungen wie beispielsweise Kot und Urin versetzt ist, als Dünger weiterverwendet zu werden. Die bekannten Arten von Einstreu und Einstreuzusätzen genügen diesen vielfältigen Anforderungen nur bedingt.

Die CN108243971A offenbart eine lehm- bzw. tonfreie, sandbasierte Katzeneinstreu in Granulatform, die als wirksame Bindekomponente für die Ausscheidungen der Katze Rutenhirse enthält. Die Rutenhirse interferiert nicht mit den geruchsbindenden Eigenschaften des Sandes. Die granulatförmige Katzeneinstreu ist biologisch abbaubar, und sie ist sicher in der Anwendung für Mensch und Tier.

DE102005057348A1 offenbart ein Verfahren zur Herstellung eines Einstreuzusatzes für die Tierhaltung, wobei eine Mischung aus Miscanthus und Stroh pelletiert wird.

Es besteht daher ein Bedarf an einem Einstreuzusatz mit verbesserten Eigenschaften.

### Zusammenfassung der Erfindung

Die vorliegende Offenbarung betrifft einen Einstreuzusatz für die Tierhaltung, wobei der Einstreuzusatz Fasern von Miscanthus, Napiergras und/oder Rutenhirse aufweist, wobei der Einstreuzusatz weiter Fasern von Pflanzenkohle aufweist, wobei die Fasern eine Länge von 0,1 bis 20 mm haben, und wobei die Pflanzenkohle in dem Einstreuzusatz einen Anteil von 5 bis 50 Gew.-%, bezogen auf das Gesamtgewicht des Einstreuzusatzes, hat.

Die Offenbarung betrifft weiter eine Einstreu für die Tierhaltung mit dem erfindungsgemäßen Einstreuzusatz.

Die Erfindung betrifft in Verfahren gemäß Anspruch 1 zur Herstellung eines Einstreuzusatzes für die Tierhaltung, das Verfahren umfassend die Schritte:
a) Bereitstellen eines Gemischs, das Miscanthus, Napiergras und/oder Rutenhirse umfasst, und das weiter Pflanzenkohle umfasst, wobei das Gemisch einen Feuchtigkeitsgehalt von 20 bis 40 Gew.-%, bezogen auf das Gesamtgewicht des Gemischs, hat, und wobei die Pflanzenkohle in dem Gemisch einen Anteil von 5 bis 50 Gew.-%, bezogen auf das Gesamtgewicht des Gemischs, hat,
b) Aufschließen des Gemischs in einem Extruder, der eingerichtet ist, das Gemisch zu Fasern mit einer Länge von 0,1 bis 20 mm zu verarbeiten, wobei die Fasern den Einstreuzusatz bilden, bei einer Temperatur von 60 bis 100 °C, und
c) Kühlen des Einstreuzusatzes auf 10 bis 25 °C.

Die Erfindung betrifft weiter einen Einstreuzusatz gemäß Anspruch 12 für die Tierhaltung, erhältlich durch das erfindungsgemäße Verfahren.

Die Erfindung betrifft weiter eine Verwendung gemäß Anspruch 14 des erfindungsgemäßen Einstreuzusatzes zum Herstellen einer Einstreu für ein Tier.

Die Erfindung betrifft weiter eine Verwendung gemäß Anspruch 15 des erfindungsgemäßen Einstreuzusatzes oder der erfindungsgemäßen Einstreu als Düngemittel, Gartensubstrat, Gartenmulch und/oder Dämmstoff.

### Detaillierte Beschreibung der Erfindung

In einem ersten Aspekt betrifft die Offenbarung einen Einstreuzusatz für die Tierhaltung, wobei der Einstreuzusatz Fasern von Miscanthus, Napiergras und/oder Rutenhirse aufweist, wobei der Einstreuzusatz weiter Fasern von Pflanzenkohle aufweist, wobei die Fasern eine Länge von 0,1 bis 20 mm haben, und wobei die Pflanzenkohle in dem Einstreuzusatz einen Anteil von 5 bis 50 Gew.-%, bezogen auf das Gesamtgewicht des Einstreuzusatzes, hat.

Der Einstreuzusatz ist für die Tierhaltung geeignet. Der Begriff "Tierhaltung" wie hier verwendet umfasst die Haltung von einem oder mehreren Tieren. Bei den Tieren kann es sich um kleinere Tiere, wie beispielsweise Hühner, Küken, Hamster, Mäuse, Ratten, Meerschweinchen, Vögel, Kaninchen, Hasen oder Katzen, als auch um große Tiere, wie beispielsweise Pferde, Esel, Lamas, Alpakas, Kühe, Schafe oder Ziegen handeln. Dabei ist der Einstreuzusatz aufgrund seiner Eigenschaften insbesondere für die Pferdehaltung geeignet.
Der Einstreuzusatz weist Fasern von Miscanthus, Napiergras und/oder Rutenhirse auf. Miscanthus ist eine Pflanzengattung innerhalb der Familie der Süßgräser. Der Begriff "Miscanthus" wie hier verwendet umfasst jede Art, die dieser Pflanzengattung angehört, wie zum Beispiel *Miscanthus x giganteus, Miscanthus sacchariflorus* und *Miscanthus sinensis. Miscanthus x giganteus,* auch als Riesen-Chinaschilf bekannt, ist eine schnellwüchsige perennierende Pflanze mit hohem Brennwert und günstiger Kohlendioxidbilanz, die auch im europäischen Raum bis zu vier Meter hoch wächst. Aufgrund der verschiedenen energetischen und stofflichen Nutzungsmöglichkeiten nimmt der Anbau von *Miscanthus x giganteus* als nachwachsender Rohstoff immer mehr zu. *Miscanthus x giganteus* ist daher leicht erhältlich.

Napiergras (*Pennisetum purpureum*) ist eine Pflanzenart aus der Familie der Süßgräser. Napiergras, auch als Elefantengras bezeichnet, ist eine schnellwüchsige perennierende Pflanze und wächst bis zu sechs Meter hoch. Napiergras ist nicht winterhart und wird daher im südeuropäischen Raum sowie in tropischen und subtropischen Ländern angebaut. Napiergras ist das am meisten angebaute Futtergras und ist daher ein leicht erhältlicher nachwachsender Rohstoff.

Rutenhirse (*Panicum virgatum* L.) ist eine Pflanzenart aus der Familie der Süßgräser. Rutenhirse, auch als Switchgras bezeichnet, ist eine perennierende Pflanze mit geringen Wasser- und Nährstoffansprüchen und wächst auch im europäischen Raum bis zu 2,5 Meter hoch. Rutenhirse wird vor allem zur Erzeugung von Biogas oder zur Verwendung als Brennstoff angebaut und gewinnt als nachwachsender Rohstoff zunehmend an Bedeutung.

Der Einstreuzusatz weist weiter Fasern von Pflanzenkohle auf. Der Begriff "Pflanzenkohle" wie hier verwendet bezeichnet ein Material, das durch Pyrolyse von nachwachsenden pflanzlichen Ausgangsstoffen wie zum Beispiel Holz, Gräsern oder Grünschnitt hergestellt und auch als "Biokohle" bezeichnet wird. Die Pyrolyse wird im Allgemeinen unter Sauerstoffausschluss bei Temperaturen zwischen 275 °C und 1000 °C durchgeführt. Die Mineralstoffe der ursprünglich eingesetzten Ausgangsstoffe werden in den Poren und an der Oberfläche der Pflanzenkohle gebunden. Pflanzenkohle ist porös und besitzt eine hohe spezifische Oberfläche, die typischerweise im Bereich von etwa 150 bis 1000 m²/g liegt. Durch die große Oberfläche pro Masseneinheit bindet Pflanzenkohle große Mengen von Wasser und trocknet schnell wieder ab. Außerdem werden Geruchsstoffe und Schadstoffe sehr gut an der Oberfläche von Pflanzenkohle gebunden. Pflanzenkohle wird vorwiegend zur Bodenverbesserung in der Landwirtschaft eingesetzt und ist daher leicht erhältlich.

Die Pflanzenkohle hat in dem Einstreuzusatz einen Anteil von 5 bis 50 Gew.-%, bezogen auf das Gesamtgewicht des Einstreuzusatzes.

Der Begriff "Gewichtsprozent" (Gew.-%) wie hier verwendet bezeichnet ein Maß für die anteilige Masse einer Komponente an einem Gemisch, beispielsweise für die anteilige Masse der Pflanzenkohle in dem Einstreuzusatz. Beispielsweise enthält ein Einstreuzusatz mit einem Anteil an Pflanzenkohle von 10 Gew.-% 100 g Pflanzenkohle je 1 kg Einstreuzusatz. Dividiert man den in Gew.-% angegebenen Wert durch 100, so erhält man den Massenanteil. Der Massenanteil ist die relative Masse einer Komponente an der Gesamtmasse eines Gemischs und kann mittels des Bruchs aus der Masse der Komponente durch die Gesamtmasse des Gemischs berechnet werden. Beispielsweise entspricht daher ein Anteil an Pflanzenkohle in dem Einstreuzusatz von 10 Gew.-% einem Massenanteil der Pflanzenkohle in dem Einstreuzusatz von 0,1.

In dem Einstreuzusatz liegen sowohl der Miscanthus, das Napiergras und/oder die Rutenhirse als auch die Pflanzenkohle in Form von Fasern vor. Die Fasern des Miscanthus, des Napiergrases und/oder der Rutenhirse haben eine Länge von 0,1 bis 20 mm. Auch die Fasern der Pflanzenkohle haben eine Länge von 0,1 bis 20 mm. Dadurch weist der Einstreuzusatz eine große Oberfläche und eine sehr hohe Adsorptionsfähigkeit für Flüssigkeiten auf. Der Begriff "Adsorptionsfähigkeit für Flüssigkeiten" wie hier verwendet bezeichnet die Fähigkeit eines Materials zur Aufnahme von Flüssigkeiten wie beispielsweise Wasser oder Urin bzw. zur Aufnahme von Feuchtigkeit. Sie kann auch als Saugfähigkeit bezeichnet werden. Durch die hohe Adsorptionsfähigkeit für Flüssigkeiten kann der Einstreuzusatz wässrige tierische Ausscheidungen wie Urin besonders gut aufnehmen und binden. Bei der Adsorption von Flüssigkeiten durch den Einstreuzusatz ist keine Schmierfilmbildung festzustellen, so dass von dem Einstreuzusatz keine Ausrutschgefahr für die Tiere ausgeht. Durch die hohe Adsorptionsfähigkeit des Einstreuzusatzes bleiben zudem weitere Bestandteile einer Einstreu, wie beispielsweise Stroh in Pferdestallungen, trocken und müssen weniger häufig ausgetauscht werden.

Neben der hohen Adsorptionsfähigkeit weist der Einstreuzusatz weitere verbesserte Eigenschaften im Vergleich zu herkömmlichen Einstreumaterialien und Einstreuzusätzen auf. So verfügt der Einstreuzusatz über eine erhöhte Bindung von Geruchsstoffen, Schadstoffen und Schadgasen, wie beispielsweise Ammoniak, Lachgas und Methan. Dadurch werden Gerüche reduziert und das Stallklima wird insgesamt verbessert. Durch die Adsorption von Schadstoffen trägt der Einstreuzusatz auch dazu bei, Erkrankungen der Tiere, insbesondere im Atemwegsbereich und an Haut und Hufen, zu vermeiden. Dadurch verbessert sich die physische und psychische Kondition der Tiere. Der Einstreuzusatz reduziert zudem die Wärmebildung und die Staubentwicklung in Stallungen.

Der Einstreuzusatz ist ferner sehr weich und begünstigt das Liegeverhalten der Tiere.

Durch die effiziente Bindung von Flüssigkeiten durch den Einstreuzusatz wird außerdem die Anfälligkeit der Einstreu für Fäulnis, Schimmelbildung und Schädlingsbesiedelung verringert. Somit trägt der Einstreuzusatz zu einer Verbesserung der Hygiene in den Stallungen bei. Dies ist nicht nur für die Gesundheit der Tiere, sondern auch für die Gesundheit der Stallarbeiter bzw. der Tierhalter förderlich. Zudem sind keine Antibiotika erforderlich, was insbesondere in der Nutztierhaltung von Vorteil ist.

Die Fasern des Miscanthus, des Napiergrases und/oder der Rutenhirse bilden mit den Fasern der Pflanzenkohle in dem Einstreuzusatz ein homogenes Fasergemisch. Die Fasern des Miscanthus, des Napiergras und/oder der Rutenhirse liegen in dem Gemisch mit den Fasern der Pflanzenkohle eng an- und übereinander. Dies ist sowohl mit bloßem Auge als auch unter einem Lichtmikroskop deutlich zu erkennen. Ein Entmischen der Fasern ist nicht festzustellen, das heißt die aneinander liegenden Fasern gehen nicht mehr auseinander. Dies vereinfacht die Verwendung und auch die Weiterverarbeitung des Einstreuzusatzes.

Ein Teil der Fasern kann zu Agglomeraten zusammengelagert sein. Vor allem kleinere Fasern mit einer Länge von 0,1 bis 10 mm können in dem Einstreuzusatz aneinander hängen bleiben und dadurch Agglomerate bilden. Die Fasern sind in den Agglomeraten zwar zusammengelagert, aber nicht dicht gepackt, so dass die Agglomerate wie die losen Fasern selbst sehr weich sind. Durch das lose Zusammenlagern wird die spezifische Oberfläche der Fasern nicht oder nur minimal verringert.

Die Fasern haben je nach Form einen Durchschnitt oder eine Breite von 0,1 bis 2 mm, wobei die Mehrheit der Fasern (etwa 80 bis 95% der Fasern) einen Durchschnitt oder eine Breite von 0,1 bis 1 mm hat.

Ein Teil der Fasern, insbesondere ein Teil der Fasern des Miscanthus, des Napiergrases und/oder der Rutenhirse, kann an einem oder beiden Längsenden der Fasern in Längsrichtung der Faser weiter aufgespalten sein, so dass die Längsenden ausgefranst erscheinen. Dies trägt zu der hohen spezifischen Oberfläche des Einstreuzusatzes bei.

Der Einstreuzusatz weist allgemein sehr gute Gebrauchseigenschaften auf, da er sich in trockenem Zustand einfach und ohne Staubentwicklung ausbringen und im feuchten Zustand auch einfach wieder entfernen lässt.

Des Weiteren trägt der Einstreuzusatz zur Bildung eines stabilen, rutschfesten und trockenen Bodenbelags bei, der optimale Lauf- und Liegeeigenschaften gewährleistet.

Ein weiterer Vorteil des Einstreuzusatzes besteht darin, dass der Einstreuzusatz und eine damit versetzte Einstreu nach Gebrauch weiterverwendet werden können. Sie können zum Beispiel zur dezentralen Energieerzeugung am Standort der Tierhaltung genutzt werden. Sie können auch als Brennstoff zur Erzeugung von Synthesegas und/oder Wasserstoffgas verwendet werden. Weiterhin sind der Einstreuzusatz und eine damit versetzte Einstreu nach Gebrauch durch die Bindung von beispielsweise Stickstoff und Mineralien aus den tierischen Ausscheidungen aufgewertet und somit als biologisches Düngemittel einsetzbar. Auch eine Weiterverwendung als Gartensubstrat, als Gartenmulch oder als Dämmstoff ist möglich. Durch die Weiterverwendungsmöglichkeiten können Kosten für die Entsorgung in zentralen Entsorgungseinrichtungen sowie, falls die Weiterverwendung am Standort der Tierhaltung erfolgt, Transportkosten eingespart werden.

Durch die hohe Adsorptionsfähigkeit für Flüssigkeiten und die hohe Wasserhaltefähigkeit verrottet der Einstreuzusatz auch sehr gut, was insbesondere für eine Weiterverwendung als Düngemittel von Vorteil ist.

In einer bevorzugten Ausführungsform haben die Fasern eine Länge von 0,1 bis 16 mm, weiter bevorzugt von 0,1 bis 10 mm, weiter bevorzugt von 0,1 bis 8 mm, weiter bevorzugt von 0,1 bis 6 mm, weiter bevorzugt von 0,1 bis 5 mm. Durch Auswahl von Fasern in kleineren Längenbereichen lässt sich die spezifische Oberfläche und die Homogenität des Einstreuzusatzes weiter steigern.

Die spezifische Oberfläche des Einstreuzusatzes kann auch durch einen hohen Anteil an kleineren Fasern gesteigert werden. In einer bevorzugten Ausführungsform haben daher 60 bis 90 % der Fasern des Einstreuzusatzes eine Länge von 0,1 bis 10 mm, weiter bevorzugt von 0,1 bis 5 mm.

In einer bevorzugten Ausführungsform ist der Anteil der Pflanzenkohle in dem Einstreuzusatz 5 bis 40 Gew.-% bezogen auf das Gesamtgewicht des Einstreuzusatzes. Bei diesem Anteil der Pflanzenkohle weist der Einstreuzusatz optimale Eigenschaften, insbesondere hinsichtlich der Adsorptionsfähigkeit für Flüssigkeiten, Geruchsstoffe und Schadstoffe, auf. In einer weiter bevorzugten Ausführungsform ist der Anteil der Pflanzenkohle in dem Einstreuzusatz 5 bis 30 Gew.-%, weiter bevorzugt 10 bis 20 Gew.-%, weiter bevorzugt 15 bis 20 Gew.-%, weiter bevorzugt 20 Gew.-%, bezogen auf das Gesamtgewicht des Einstreuzusatzes.

Durch die Pflanzenkohle hat der Einstreuzusatz eine dunkle Farbe. Je niedriger der Anteil der Pflanzenkohle in dem Einstreuzusatz ist, umso heller ist die Farbe des Einstreuzusatzes. Eine helle Farbe ist für die Verwendung des Einstreuzusatzes für eine Einstreu für bestimmte Tiere, beispielsweise für Katzen, bevorzugt, um dem Wunsch der Tierhalter nach einer hellen Einstreu nachzukommen. In einer bevorzugten Ausführungsform ist der Anteil der Pflanzenkohle in dem Einstreuzusatz daher 5 bis 15 Gew.-%, weiter bevorzugt 5 bis 10 Gew.-%, bezogen auf das Gesamtgewicht des Einstreuzusatzes.

In einer bevorzugten Ausführungsform sind die Fasern durch einen faserigen Aufschluss eines Gemischs, das Miscanthus, Napiergras und/oder Rutenhirse umfasst, und das weiter Pflanzenkohle umfasst, gewonnen.

Der Begriff "faseriger Aufschluss" wie hier verwendet bezeichnet die Verarbeitung der Ausgangsmaterialien des Einstreuzusatzes zu Fasern mit einer Länge im gewünschten Längenbereich. Der Aufschluss ist ein thermomechanischer Aufschluss, das heißt die Ausgangsmaterialien werden während des Aufschlusses einem erhöhten Druck und einer erhöhten Temperatur ausgesetzt. Der Aufschluss wird üblicherweise mittels eines Extruders durchgeführt und daher auch als Extrusion bezeichnet. Durch den faserigen Aufschluss werden die Ausgangsmaterialien nicht nur zu Fasern zerkleinert, sondern es findet auch eine Veränderung der Oberfläche der Materialien statt, die zu einer Vergrößerung der Oberfläche der Materialien führt. Durch die Vergrößerung der Oberfläche erhöht sich die Adsorptionsfähigkeit der resultierenden Fasern. Somit wird durch den faserigen Aufschluss die hohe Adsorptionsfähigkeit des Einstreuzusatzes für Flüssigkeiten sowie für Geruchsstoffe und Schadstoffe weiter gesteigert. Durch das Aufschließen eines Gemischs, das Miscanthus, Napiergras und/oder Rutenhirse umfasst, und das weiter Pflanzenkohle umfasst, werden der Miscanthus, das Napiergras und/oder die Rutenhirse sowie die Pflanzenkohle der gleichen thermomechanischen Belastung ausgesetzt. Dies resultiert in Fasern von Miscanthus, Napiergras und/oder Rutenhirse sowie Fasern von Pflanzenkohle, die eine einheitliche Längenverteilung aufweisen und ein homogenes Gemisch bilden.

In einer bevorzugten Ausführungsform hat der Einstreuzusatz einen Feuchtigkeitsgehalt von 2 bis 25 Gew.-%, vorzugsweise 2 bis 10 Gew.-%, weiter bevorzugt 2 bis 5 Gew.-%, bezogen auf das Gesamtgewicht des Einstreuzusatzes. Ein geringer Feuchtigkeitsgehalt des Einstreuzusatzes verhindert ein Zusammenkleben der Fasern und trägt somit dazu bei, dass die Oberfläche des Einstreuzusatzes und die Homogenität des Gemischs aus Fasern von Miscanthus, Napiergras und/oder Rutenhirse und Fasern von Pflanzenkohle erhalten bleiben. Dementsprechend verbessert ein geringer Feuchtigkeitsgehalt sowohl die Adsorptionsfähigkeit des Einstreuzusatzes für Flüssigkeiten als auch die Handhabung des Einstreuzusatzes. Ferner begünstigt ein geringer Feuchtigkeitsgehalt die Lagerfähigkeit des Einstreuzusatzes.

In einer bevorzugten Ausführungsform weist der Einstreuzusatz Fasern von Miscanthus, Napiergras oder Rutenhirse, vorzugsweise von Miscanthus auf. Die Verwendung von nur einer Art von Gras führt zu homogeneren Eigenschaften des Einstreuzusatzes und erleichtert die Beschaffung der Ausgangsmaterialien für dessen Herstellung.

Aufgrund der vorteilhaften Eigenschaften von Miscanthus ist Miscanthus unter den Gräsern besonders bevorzugt. Beispielsweise verhindert Miscanthus nicht nur durch die Bindung von Flüssigkeiten sondern auch direkt die Ansiedlung von Bakterien, Pilzen, insbesondere Schimmelpilzen, und anderen Schädlingen. Dies verbessert die hygienischen Verhältnisse in den Stallungen, so dass beispielsweise Huferkrankungen der Tiere besser heilen. Miscanthus verhindert zudem die Bildung von Ammoniak. In einer besonders bevorzugten Ausführungsform weist der Einstreuzusatz daher Fasern von Miscanthus und Fasern von Pflanzenkohle auf. Dabei kann die komplette oberirdische Pflanze von Miscanthus für die Herstellung des Einstreuzusatzes verwendet werden.

In einer bevorzugten Ausführungsform ist die Pflanzenkohle aus Kakaoschalen hergestellt. Kakaoschalen fallen in der Verwertung von Kakaobohnen in der Lebensmittelindustrie in größeren Mengen an und sind daher ein gut verfügbares und preisgünstiges Ausgangsmaterial für die Herstellung von Pflanzenkohle. Pflanzenkohle aus Kakaoschalen kann zudem auf einfache Weise in konstanter und hoher Qualität hergestellt werden.

Kakaoschalen haben einen geringen Feuchtigkeitsgehalt und sind nur minimal mit Schwermetallen belastet. Sie verfügen über einen hohen Gehalt an Stickstoff, Phosphor, Kalium und Magnesium. Daher ist aus Kakaoschalen hergestellte Pflanzenkohle besonders reich an Mineralstoffen.

Bei der Herstellung von Pflanzenkohle aus Kakaoschalen entsteht Dampf, der zur Energiegewinnung genutzt werden kann. Das Abwasser, das beim Verarbeiten der Kakaobohnen in der Lebensmittelindustrie entsteht, kann im Prozess der Herstellung von Pflanzenkohle aus Kakaoschalen genutzt werden, insbesondere um im Herstellungsprozess die Pflanzenkohle abzukühlen. Dabei werden auch Mineralien aus dem Abwasser an die Pflanzenkohle gebunden, so dass die Pflanzenkohle zusätzlich mit Mineralien angereichert wird.

Die Kakaoschalen können vor der Herstellung der Pflanzenkohle zu einem homogenen Material komprimiert werden. Dadurch wird eine gleichmäßige und hohe Qualität in der Herstellung der Pflanzenkohle gewährleistet.

Aus Kakaoschalen hergestellte Pflanzenkohle weist einen sehr geringen Gehalt an polyzyklischen aromatischen Kohlenwasserstoffen (PAK) auf. PAK sind häufig krebserregend, erbgutverändernd und/oder fortpflanzungsgefährdend. Zudem sind sie häufig in der Umwelt stabil, das heißt sie werden kaum abgebaut, und können sich aufgrund der lipophilen Eigenschaften in der Umwelt und in lebenden Organismen anreichern. PAK entstehen als Nebenprodukt bei Verbrennung von organischem Material unter Luftausschluss. Je niedriger die Temperatur und je weniger Sauerstoff zur Verbrennung zur Verfügung steht, desto mehr PAK werden gebildet. Neben den Verfahrensparametern ist die Bildung von PAK auch vom Ausgangsmaterial und vor allem von dessen Feuchtigkeitsgehalt abhängig. Kakaoschalen sind relativ hydrophob und weisen daher einen geringen Feuchtigkeitsgehalt auf. Dadurch ist bei der Verarbeitung von Kakaoschalen zu Pflanzenkohle sichergestellt, dass die gelagerten Kakaoschalen keine feuchten Nester aufweisen, die zu geringeren Prozesstemperaturen bei der Herstellung der Pflanzenkohle führen würden. Bei einer Temperatur von 600 °C hergestellte Pflanzenkohle aus Kakaoschalen enthält lediglich 1,1 mg/kg PAK. Somit weist ein Einstreuzusatz mit Fasern von aus Kakaoschalen hergestellter Pflanzenkohle einen PAK-Gehalt von weniger als 0,6 mg/kg auf. Beispielsweise hat ein Einstreuzusatz, der aus 80 Gew.-% Fasern von Miscanthus und 20 Gew.-% Fasern von Pflanzenkohle, die aus Kakaoschalen hergestellt ist, besteht, einen PAK-Gehalt von 0,22 mg/kg. Durch die Verwendung von Pflanzenkohle aus Kakaoschalen wird daher ein umweltfreundlicher Einstreuzusatz bereitgestellt, der kein gesundheitliches Risiko für Mensch und Tiere darstellt. Des Weiteren werden die geringen Mengen an PAK sehr gut von der Pflanzenkohle gebunden, wodurch ein Abgeben der PAK an die Umwelt weitgehend vermieden wird.

Aus Kakaoschalen hergestellte Pflanzenkohle weist auch einen sehr geringen Gehalt an polychlorierten Biphenylen (PCB) auf. PCB sind giftig und krebserregend. Der geringe PCB-Gehalt von aus Kakaoschalen hergestellter Pflanzenkohle trägt dazu bei, dass durch die Verwendung von Pflanzenkohle aus Kakaoschalen ein Einstreuzusatz bereitgestellt wird, der kein gesundheitliches Risiko für Mensch und Tiere darstellt.

In einer weiteren Ausführungsform ist die Pflanzenkohle aus Miscanthus hergestellt. Aus Miscanthus hergestellte Pflanzenkohle ist reich an Mineralstoffen, verfügt über eine große spezifische Oberfläche von etwa 800 m²/g, hat eine hohe Adsorptionsfähigkeit und eine hohe Kationenaustauschkapazität. Ihr molares H/C-Verhältnis liegt bei 0,3. Damit ist aus Miscanthus hergestellte Pflanzenkohle besonders wertvoll. Der PAK-Gehalt von aus Miscanthus hergestellter Pflanzenkohle ist ebenfalls sehr niedrig.

In einer weiteren Ausführungsform ist die Pflanzenkohle aus Grünschnitt, Dinkelspelzen, einem perennierenden C4-Gras und/oder einem annuellen C4-Gras hergestellt.

In einer bevorzugten Ausführungsform ist die Pflanzenkohle mit Nährstoffen, Enzymen und/oder Spurenelementen versetzt. Die Pflanzenkohle bindet die Nährstoffe, Enzyme und/oder Spurenelemente, so dass diese im Falle einer Weiterverwendung des Einstreuzusatzes nach Gebrauch weiter zur Verfügung stehen. Dies kann beispielsweise bei einer Weiterverwendung des gebrauchten Einstreuzusatzes als Düngemittel genutzt werden, um die Bodenqualität zu verbessern und im Boden vorkommende Lebewesen wie Regenwürmer und Mikroorganismen zu fördern.

In einer bevorzugten Ausführungsform besteht der Einstreuzusatz im Wesentlichen aus Fasern von Miscanthus und Fasern von Pflanzenkohle. Der Einstreuzusatz besteht vorzugsweise zu mindestens 90 %, weiter bevorzugt zu mindestens 95%, weiter bevorzugt zu mindestens 98% aus Fasern von Miscanthus und Fasern von Pflanzenkohle. Durch den hohen Anteil bleiben die positiven Eigenschaften des Gemisches aus Fasern aus Miscanthus und Fasern aus Pflanzenkohle, wie beispielsweise die hohe Adsorptionsfähigkeit, die Homogenität des Gemischs und der niedrige PAK-Gehalt, in dem Einstreuzusatz besonders gut erhalten.

In einer besonders bevorzugten Ausführungsform besteht der Einstreuzusatz aus Fasern von Miscanthus und Fasern von Pflanzenkohle. In einer weiter bevorzugten Ausführungsform besteht der Einstreuzusatz aus 80 Gew.-% Fasern von Miscanthus und 20 Gew.-% Fasern von Pflanzenkohle, jeweils bezogen auf das Gesamtgewicht des Einstreuzusatzes.

In einer weiter bevorzugten Ausführungsform besteht der Einstreuzusatz aus 80 Gew.-% Fasern von Miscanthus und 20 Gew.-% Fasern von Pflanzenkohle, jeweils bezogen auf das Gesamtgewicht des Einstreuzusatzes, wobei die Pflanzenkohle aus Kakaoschalen hergestellt ist. Dieser Einstreuzusatz hat sich als besonders vorteilhaft erwiesen. Er weist zum Beispiel eine Wasserhaltekapazität ("water-holding capacity", WHC) nach DIN ISO 14238 von 207,8 Gew.-% auf, das heißt 1 kg des Einstreuzusatzes kann etwa 2 kg Wasser aufnehmen. Der Einstreuzusatz weist einen pH-Wert in CaCl₂-Lösung von 6,8 auf. Somit verhält sich der Einstreuzusatz bei Kontakt mit Flüssigkeiten pH-neutral. Somit sind die Tiere, die im ständigen Kontakt mit dem Einstreuzusatz stehen, nicht einem sauren oder basischen pH-Wert der Einstreu ausgesetzt, der auf Haut und Hufe der Tiere reizend wirken kann. Die Reindichte des Einstreuzusatzes beträgt 1,4 g/cm³.

In einer bevorzugten Ausführungsform umfasst der Einstreuzusatz weiter Schafwolle, vorzugsweise in Form von Fasern, weiter bevorzugt in Form von Fasern mit einer Länge von 0,1 bis 20 mm. Schafwolle verfügt über gute feuchtigkeits- und schadstoffadsorbierende Eigenschaften. Dadurch verbessert Schafwolle die Adsorptionsfähigkeit des Einstreuzusatzes für Flüssigkeiten als auch für Geruchs- und Schadstoffe. Bei Gebrauch des Einstreuzusatzes ist zudem die Pufferkapazität der Wollfasern für den pH-Wert des Einstreuzusatzes vorteilhaft. Die Schafwolle kann für die Herstellung des Einstreuzusatzes zusammen mit dem Miscanthus, dem Napiergras und/oder der Rutenhirse sowie der Pflanzenkohle einem faserigen Aufschluss unterzogen werden. In diesem Fall liefert die Schafwolle im Aufschluss Aminosäuren als Nährstoffe, die bei einer Weiterverwendung des gebrauchten Einstreuzusatzes als Düngemittel wertvoll sind. Die Fasern der Schafwolle sind sehr fein und größtenteils gekräuselt. Dadurch bleiben sie leicht aneinander sowie an den anderen Fasern des Einstreuzusatzes hängen, so dass ein Teil der Fasern des Einstreuzusatzes zu Agglomeraten zusammengelagert ist. Die Fasern sind in den Agglomeraten zwar zusammengelagert, aber nicht dicht gepackt, so dass die Agglomerate wie die losen Fasern selbst sehr weich sind.

In einer besonders bevorzugten Ausführungsform besteht der Einstreuzusatz aus 60 Gew.-% Fasern von Miscanthus, 20 Gew.-% Fasern von Pflanzenkohle und 20 Gew.-% Fasern von Schafwolle, jeweils bezogen auf das Gesamtgewicht des Einstreuzusatzes.

In einer bevorzugten Ausführungsform liegt der Einstreuzusatz als gepresstes Granulat und/oder als gepresste Pellets vor.

Der Begriff "Granulat" wie hier verwendet bezeichnet ein körniges, leicht schüttbares Material. Die Körner des Granulats haben vorzugsweise einen Durchmesser von etwa 3 bis etwa 12 mm. Das Granulat kann beispielsweise durch Zerkleinern von Pellets erhalten sein. In diesem Fall haben die Körner des Granulats vorzugsweise eine Länge von etwa 3 bis etwa 12 mm und einen Durchmesser von etwa 6 bis etwa 12 mm.

Der Begriff "Pellet" wie hier verwendet bezeichnet einen kleinen Körper aus verdichtetem, beispielsweise gepresstem, Material in Kugel- oder Zylinderform. Ein Pellet in zylindrischer Form hat vorzugsweise eine Länge von etwa 3 bis etwa 30 mm, weiter bevorzugt von etwa 3 bis etwa 20 mm, weiter bevorzugt von etwa 3 bis etwa 15 mm, und einen Durchmesser von etwa 6 bis etwa 12 mm, weiter bevorzugt von etwa 6 bis etwa 8 mm.

Durch das Vorliegen des Einstreuzusatzes in Form von Granulat bzw. als Pellets lässt sich der Einstreuzusatz ohne Staubentwicklung einfach in Stallungen oder Käfige einbringen und ausbringen. Er weist zudem verbesserte Lagerungseigenschaften sowie verbesserte Dosiereigenschaften auf. Des Weiteren lässt sich der Einstreuzusatz in Form von Granulat bzw. als Pellets, insbesondere wenn er mit tierischen Ausscheidungen wie Urin und Kot in Berührung gekommen ist, leicht an der Oberfläche einer Einstreu entfernen, ohne dass die Einstreu vollständig aus den Stallungen oder Käfigen entfernt werden muss.

Die Pellets aus dem Einstreuzusatz weisen eine besonders große Verdunstungsfläche für aufgenommene Feuchtigkeit auf, so dass sie kontinuierlich Feuchtigkeit an die Umgebung abgeben. Dadurch sind die Pellets nach Aufnahme von Flüssigkeit sehr schnell wieder trocken.

In einer bevorzugten Ausführungsform ist der Einstreuzusatz zusammen mit Miscanthus-Granulat und/oder Miscanthus-Häckseln zu Pellets gepresst.
Der Begriff "Häcksel" wie hier verwendet bezeichnet zerkleinerte Pflanzenteile, die beispielsweise beim Zerschneiden von Pflanzenteilen mittels einer Häckselmaschine entstehen. Die Häcksel haben vorzugsweise eine Länge von etwa 3 bis etwa 120 mm. Für das Verpressen des Einstreuzusatzes mit Miscanthus-Häckseln werden vorzugsweise feine Miscanthus-Häcksel mit einer Länge von etwa 3 bis etwa 30 mm und einer Breite von etwa 0,5 bis etwa 5 mm verwendet.

Miscanthus-Granulat und Miscanthus-Häcksel weisen ein sehr gutes Saugverhalten auf, binden Geruchsstoffe und trocknen schnell. Somit werden die positiven Eigenschaften des Einstreuzusatzes durch das gemeinsame Verpressen mit Miscanthus-Granulat und/oder Miscanthus-Häckseln nicht beeinträchtigt.

In einem zweiten Aspekt betrifft die Offenbarung eine Einstreu für die Tierhaltung mit dem Einstreuzusatz. Der Einstreuzusatz kann zu einer üblicherweise verwendeten Einstreu hinzugefügt werden. Beispielsweise kann der Einstreuzusatz einer Einstreu während der Herstellung zugesetzt werden. Vorzugsweise wird der Einstreuzusatz der Einstreu jedoch erst kurz vor Ausbringen der Einstreu hinzugefügt. Dadurch kann der Anteil des Einstreuzusatzes in der Einstreu individuell festgelegt werden. Durch den Einstreuzusatz lassen sich die Eigenschaften der Einstreu wie beispielsweise deren Adsorptionsfähigkeit für Flüssigkeiten und Geruchsstoffe gezielt beeinflussen. Außerdem kann die Nutzungsdauer der Einstreu durch den Einstreuzusatz verlängert werden. Beispielsweise bleiben durch die hohe Adsorptionsfähigkeit des Einstreuzusatzes die weiteren Bestandteile der Einstreu, wie beispielsweise Stroh in Pferdestallungen, trocken, so dass diese weniger häufig ausgetauscht werden müssen. Die verlängerte Nutzungsdauer der Einstreu verbessert die Wirtschaftlichkeit der Stallungen. So reduzieren sich Arbeits- und Zeitaufwand für den Austausch der Einstreu und die Reinigung der Stallungen. Zudem reduziert sich das Entsorgungsvolumen der gebrauchten Einstreu. Insgesamt können somit Anschaffungskosten, Personalausgaben und Entsorgungskosten eingespart werden.

In einer bevorzugten Ausführungsform hat der Einstreuzusatz in der Einstreu einen Anteil von mindestens 5 Gew.-%, vorzugsweise von mindestens 10 Gew.-%, weiter bevorzugt von mindestens 20 Gew.-%, bezogen auf das Gesamtgewicht der Einstreu. Der Anteil des Einstreuzusatzes in der Einstreu hängt von der Art der Einstreu und der beabsichtigten Verwendung der Einstreu ab. Je nachdem, ob die Einstreu für Kleintiere wie beispielsweise Nager oder für Großtiere wie beispielsweise Pferde genutzt werden soll, weichen die Anforderungen an die Einstreu voneinander ab. So ist bei Kleintieren, die in Wohnräumen gehalten werden, die Geruchsbindung der Einstreu besonders wichtig. In der Pferdehaltung spielen neben Saug-, Trocknungs- und Geruchsbindungsfähigkeit der Einstreu auch die Staubentwicklung und die Lauf- und Liegeeigenschaften der Einstreu eine Rolle.

In einer bevorzugten Ausführungsform weist die Einstreu weiter Miscanthus-Häcksel, Miscanthus-Pellets und/oder Miscanthus-Granulat, vorzugsweise Miscanthus-Häcksel, auf. Miscanthus-Häcksel, Miscanthus-Pellets und Miscanthus-Granulat weisen ein sehr gutes Saugverhalten auf, binden Geruchsstoffe und trocknen schnell. Sie zeichnen sich zudem durch eine geringe Staubentwicklung aus. Somit werden die positiven Eigenschaften des Einstreuzusatzes durch die Verwendung mit Miscanthus-Häckseln, -Pellets und/oder -Granulat nicht beeinträchtigt. Miscanthus-Häcksel sind zudem sehr weich und begünstigen damit die Lauf- und Liegeeigenschaften der Einstreu. Die Größe der Miscanthus-Häcksel, der Miscanthus-Pellets und/oder des Miscanthus-Granulats ist in Abhängigkeit davon zu wählen, für welches Tier die Einstreu verwendet werden soll. Beispielsweise sind für Küken feine Miscanthus-Häcksel mit einer Länge von etwa 3 bis etwa 30 mm und einer Breite von etwa 0,5 bis etwa 5 mm bzw. im Fall von Miscanthus-Pellets relativ kleine Miscanthus-Pellets zu verwenden. Für größere Tiere können dagegen auch gröbere Miscanthus-Häcksel zum Einsatz kommen, beispielsweise Miscanthus-Häcksel mit einer Länge von etwa 5 bis etwa 70 mm. Für Pferde sind längere Miscanthus-Häcksel, beispielsweise mit einer Länge von etwa 50 bis etwa 120 mm bevorzugt.

In einer bevorzugten Ausführungsform besteht die Einstreu im Wesentlichen aus dem Einstreuzusatz und aus Miscanthus-Häckseln. Eine solche Einstreu weist vorzugsweise eine Zusammensetzung von 30-50 Gew.-% Einstreuzusatz und 50-70 Gew.-% Miscanthus-Häcksel, weiter bevorzugt von 30 Gew.-% Einstreuzusatz und 70 Gew.-% Miscanthus-Häcksel, jeweils bezogen auf das Gesamtgewicht der Einstreu, auf. Bei diesen Zusammensetzungen wurden sehr gute Eigenschaften, beispielsweise hinsichtlich der Adsorptionsfähigkeit für Flüssigkeiten, Geruchs- und Schadstoffe, erhalten. Eine solche Einstreu ist insbesondere für die Kleintierhaltung und die Haltung von Tieren mittlerer Größe geeignet.

In einer besonders bevorzugten Ausführungsform besteht die Einstreu aus dem Einstreuzusatz und aus Miscanthus-Häckseln.

In einer bevorzugten Ausführungsform besteht die Einstreu im Wesentlichen aus dem Einstreuzusatz und aus Miscanthus-Pellets. Eine solche Einstreu weist vorzugsweise eine Zusammensetzung von 30-50 Gew.-% Einstreuzusatz und 50-70 Gew.-% Miscanthus-Pellets, weiter bevorzugt von 30 Gew.-% Einstreuzusatz und 70 Gew.-% Miscanthus-Pellets, jeweils bezogen auf das Gesamtgewicht der Einstreu, auf. Auch bei diesen Zusammensetzungen wurden sehr gute Eigenschaften, beispielsweise hinsichtlich der Adsorptionsfähigkeit für Flüssigkeiten, Geruchs- und Schadstoffe, erhalten. Eine solche Einstreu ist insbesondere für die Großtierhaltung geeignet.

In einer besonders bevorzugten Ausführungsform besteht die Einstreu aus dem Einstreuzusatz und aus Miscanthus-Pellets.

In einer bevorzugten Ausführungsform besteht die Einstreu im Wesentlichen aus dem Einstreuzusatz, aus Miscanthus-Granulat und aus Miscanthus-Häckseln. Um die Zeiträume zwischen dem Erneuern der Einstreu in den Käfigen bzw. Stallungen von Kleintieren oder Tieren mittlerer Größe weiter zu verlängern, hat es sich als vorteilhaft erwiesen, neben Miscanthus-Häckseln auch Miscanthus-Granulat zu verwenden. Eine dementsprechende Einstreu weist vorzugsweise eine Zusammensetzung von 10 Gew.-% Einstreuzusatz, 60-70 Gew.-% Miscanthus-Häcksel und 20-30 Gew.-% Miscanthus-Granulat, jeweils bezogen auf das Gesamtgewicht der Einstreu, auf.

In einer besonders bevorzugten Ausführungsform besteht die Einstreu aus dem Einstreuzusatz, aus Miscanthus-Granulat und aus Miscanthus-Häckseln.

In einer bevorzugten Ausführungsform besteht die Einstreu im Wesentlichen aus dem Einstreuzusatz, aus Miscanthus-Häckseln und aus Miscanthus-Pellets. Um die Zeiträume zwischen dem Erneuern der Einstreu in den Stallungen in der Großtierhaltung zu verlängern, hat es sich vorteilhaft erwiesen, neben Miscanthus-Pellets auch Miscanthus-Häcksel zu verwenden. Eine dementsprechende Einstreu weist vorzugsweise eine Zusammensetzung von 10 Gew.-% Einstreuzusatz, 60-70 Gew.-% Miscanthus-Häcksel und 20-30 Gew.-% Miscanthus-Pellets, jeweils bezogen auf das Gesamtgewicht der Einstreu, auf.

In einer besonders bevorzugten Ausführungsform besteht die Einstreu aus dem Einstreuzusatz, aus Miscanthus-Häckseln und aus Miscanthus-Pellets.

In einer bevorzugten Ausführungsform ist der Einstreuzusatz zusammen mit Miscanthus-Granulat und/oder Miscanthus-Häckseln zu Pellets gepresst. Die Pellets sind vorzugsweise aus einer Zusammensetzung von 20 Gew.-% Einstreuzusatz und 80 Gew.-% Miscanthus-Granulat und/oder Miscanthus-Häckseln, jeweils bezogen auf das Gesamtgewicht der Pellets, gepresst. Die Pellets eignen sich beispielsweise als Einstreu für Katzen.

Für größere Tiere ist der Einstreuzusatz zusammen mit Miscanthus-Granulat und/oder Miscanthus-Häckseln zu Pellets gepresst und die Einstreu weist weiter Miscanthus-Häcksel auf. Die Miscanthus-Häcksel vermischen sich sehr gut mit den Pellets. Dadurch entsteht ein besonders stabiler, rutschfester Belag mit guten Lauf- und Liegeeigenschaften. Als vorteilhaft hat sich eine Zusammensetzung von 40 Gew.-% Pellets, die aus dem Einstreuzusatz zusammen mit Miscanthus-Granulat und/oder Miscanthus-Häckseln gepresst sind, und 60 Gew.-% Miscanthus-Häckseln, jeweils bezogen auf das Gesamtgewicht der Einstreu, erwiesen.

In einer bevorzugten Ausführungsform weist die Einstreu weiter Stroh, Hanf, Holzmehl, Holzpellet und/oder Holzspäne auf. Der Begriff "Stroh" wie hier verwendet umfasst ausgedroschene und trockene Halme und Blätter von Getreide, Ölpflanzen, Faserpflanzen und/oder Hülsenfrüchten. Das Stroh kann beispielsweise in Form von Strohpellets vorliegen. Das Stroh ist vorzugsweise Weizen-, Gerste-, Roggen-, Dinkel- und/oder Haferstroh.

In einer bevorzugten Ausführungsform weist die Einstreu weiter Schafwolle auf. Dadurch wird die Adsorptionsfähigkeit der Einstreu für Flüssigkeiten als auch für Geruchs- und Schadstoffe weiter erhöht.

In einer bevorzugten Ausführungsform weist die Einstreu weiter Kakaoschalen auf. Kakaoschalen sind gut verfügbar, preisgünstig und in sehr hoher Qualität erhältlich. Sie verfügen über einen geringen Feuchtigkeitsgehalt und eine hohe Adsorptionsfähigkeit für Geruchs- und Schadstoffe. Kakaoschalen sind ferner nährstoffreich, was beispielsweise bei einer Weiterverwendung der gebrauchten Einstreu als Düngemittel von Vorteil ist.

In einer bevorzugten Ausführungsform weist die Einstreu weiter mindestens einen geruchshemmenden Zusatzstoff aufweist. Der geruchshemmende Zusatzstoff kann beispielsweise ein ätherisches Öl oder eine Duftkomposition, insbesondere aus ätherischen Ölen, sein. Das ätherische Öl kann beispielsweise Zedernöl oder Eukalyptusöl sein. Zedernöle schützen die Einstreu zusätzlich gegen Insekten und Schadnager. Eukalyptusöl ist bei Erkrankungen der Atemwege und bei rheumatischen Beschwerden und Muskelschmerzen der Tiere hilfreich.

Auch Mineralien, insbesondere Sulfate, und Mikroorganismen sind als geruchshemmende Zusatzstoffe geeignet. Sulfate wie beispielsweise Magnesiumsulfat und Natriumsulfat binden Feuchtigkeit und Geruch aus der Umgebung. Sulfate sind außerdem gut als Schwefelquelle geeignet, wenn die Einstreu nach Gebrauch als Düngemittel weiterverwendet wird.

In einer bevorzugten Ausführungsform weist die Einstreu weiter Mikroorganismen auf. Die große Oberfläche der Pflanzenkohle bietet Lebensraum für Mikroorganismen. Die Pflanzenkohle lässt sich gezielt mit Mikroorganismen beladen, die für Stallungen bzw. Käfige und später zur Bodenverbesserung besonders günstig sind. Die Mikroorganismen beeinflussen beispielsweise den pH-Wert der Einstreu, reduzieren die Geruchsbelastung und können eine Belastung mit pathologischen Mikroorganismen sowie Schimmel- und Pilzbefall zurückdrängen. Wenn die Einstreu nach Gebrauch als Düngemittel weiterverwendet wird, ist der Zusatz von Mikroorganismen für die Bodenauflockerung und Bodenfruchtbarkeit von Vorteil.

In einem dritten Aspekt betrifft die Erfindung ein Verfahren zur Herstellung eines Einstreuzusatzes für die Tierhaltung, das Verfahren umfassend die Schritte:
a) Bereitstellen eines Gemischs, das Miscanthus, Napiergras und/oder Rutenhirse umfasst, und das weiter Pflanzenkohle umfasst, wobei das Gemisch einen Feuchtigkeitsgehalt von 20 bis 40 Gew.-%, bezogen auf das Gesamtgewicht des Gemischs, hat, und wobei die Pflanzenkohle in dem Gemisch einen Anteil von 5 bis 50 Gew.-%, bezogen auf das Gesamtgewicht des Gemischs, hat,
b) Aufschließen des Gemischs in einem Extruder, der eingerichtet ist, das Gemisch zu Fasern mit einer Länge von 0,1 bis 20 mm zu verarbeiten, wobei die Fasern den Einstreuzusatz bilden, bei einer Temperatur von 60 bis 100 °C, und
c) Kühlen des Einstreuzusatzes auf 10 bis 25 °C.

Der Anteil der Pflanzenkohle in dem Gemisch, das in Schritt a) bereitgestellt wird, ist entsprechend des gewünschten Anteils der Pflanzenkohle in dem resultierenden Einstreuzusatz gewählt. Wenn beispielsweise der Anteil an Pflanzenkohle in dem Einstreuzusatz 20 Gew.-%, bezogen auf das Gesamtgewicht des Einstreuzusatzes, betragen soll, dann wird in Schritt a) ein Gemisch bereit gestellt, dass 20 Gew.-% Pflanzenkohle und bis zu 80 Gew.-% Miscanthus, Napiergras und/oder Rutenhirse, jeweils bezogen auf das Gesamtgewicht des Gemischs, aufweist.

Beim Aufschließen des Gemischs in dem Extruder werden der Miscanthus, das Napiergras und/oder die Rutenhirse sowie die Pflanzenkohle mechanisch zerkleinert, das heißt es erfolgt ein thermomechanischer Aufschluss. Dabei einstehen Fasern von Miscanthus, Napiergras und/oder Rutenhirse sowie Fasern von Pflanzenkohle. Die Länge der Fasern ist einstellbar. Für das erfindungsgemäße Verfahren ist der Extruder eingerichtet, das Gemisch zu Fasern mit einer Länge von 0,1 bis 20 mm zu verarbeiten. Der Vorgang des Aufschließens des Gemischs in dem Extruder wird auch als Extrusion bezeichnet.

Durch den Feuchtigkeitsgehalt des Gemischs erfolgt in dem Extruder auch ein hydrothermaler Aufschluss des Gemischs, ausgelöst durch den hohen Druck und die hohe Temperatur. Auf diese Weise entstehen deutlich vergrößerte Zell-Oberflächen, die die Adsorptionsfähigkeit der Fasern erhöhen.

Das Aufschließen des Gemischs in dem Extruder erfolgt bei einer Temperatur von 60 bis 100 °C, vorzugsweise von 70 bis 100 °C, weiter bevorzugt von 75 bis 95 °C, weiter bevorzugt von 80 bis 95 °C. Bei loser Schüttung auf einer ebenen Betonfläche dauert es etwa 10 Minuten bis ein Einstreuzusatz, der durch einen Aufschluss bei einer Temperatur von 80 bis 95 °C erhalten wurde, auf 30 °C abgekühlt ist. Für einen kontinuierlichen Prozess kann der Einstreuzusatz nach dem Aufschluss zum Abkühlen auf einem Siebband mit einer aktiven Belüftung angeordnet werden.

Der Druck, der während des Aufschließens des Gemischs in dem Extruder entsteht und auf das Gemisch wirkt, ist vorzugsweise größer als 2 bar.

Beim Aufschließen des Gemischs in einem universell einsetzbaren Extruder konnte ein Durchsatz von etwa 380 kg Gemisch pro Stunde erreicht werden. Der Durchsatz hängt von der Größe des Extruders, der Zusammensetzung des Gemischs und dem gewünschten Aufschlussgrad ab. Bei Verwendung eines Extruders, der speziell für das Gemisch ausgelegt und angepasst ist, ist ein Durchsatz von bis zu 500 kg/h möglich.

Das für den Aufschluss bereitzustellende Gemisch hat einen Feuchtigkeitsgehalt von 20 bis 40 Gew.-%, bezogen auf das Gesamtgewicht des Gemischs. Der Feuchtigkeitsgehalt des Gemischs ist für das Aufschließen des Gemischs in dem Extruder und damit für die Eigenschaften des resultierenden Einstreuzusatzes von Bedeutung. Die Menge an Wasser, die dem Gemisch zum Erreichen des Feuchtigkeitsgehalts zugesetzt werden muss, hängt vom Feuchtigkeitsgehalt der Ausgangsmaterialien, insbesondere vom Feuchtigkeitsgehalt des Miscanthus, des Napiergrases oder der Rutenhirse, ab. Dabei weist Napiergras beispielsweise einen geringeren Feuchtigkeitsgehalt als Miscanthus auf.

Ferner wird durch den Feuchtigkeitsgehalt eine geringere Staubbelastung beim Einfüllen des Gemischs in den Extruder erzielt. Der Feuchtigkeitsgehalt kann beispielsweise durch Zugeben von Wasser zu den Ausgangsmaterialien erreicht werden. In einer bevorzugten Ausführungsform hat das Gemisch einen Feuchtigkeitsgehalt von 25 bis 40 Gew.-%, weiter bevorzugt von 30 bis 40 Gew.-%, am meisten bevorzugt von 40 Gew.-%, bezogen auf das Gesamtgewicht des Gemischs.

In einer bevorzugten Ausführungsform umfasst das Gemisch Miscanthus und Pflanzenkohle und der Feuchtigkeitsgehalt des Gemischs ist durch einen natürlichen Feuchtigkeitsgehalt des Miscanthus und/oder der Pflanzenkohle gegeben und/oder wird durch Zugeben von Wasser zu dem Miscanthus, der Pflanzenkohle und/oder dem Gemisch erreicht.

In einer besonders bevorzugten Ausführungsform ist der Feuchtigkeitsgehalt des Gemischs durch einen natürlichen Feuchtigkeitsgehalt des Miscanthus und/oder der Pflanzenkohle gegeben. Dadurch wird bei der Durchführung des Herstellungsverfahrens Wasser eingespart, da kein oder weniger Wasser zu dem Gemisch hinzugefügt werden muss.

In einer weiter bevorzugten Ausführungsform ist der Feuchtigkeitsgehalt des Gemischs durch einen natürlichen Feuchtigkeitsgehalt des Miscanthus gegeben. Wenn Miscanthus im europäischen Raum bereits im Januar oder Februar geerntet wird, dann weist der Miscanthus einen Feuchtigkeitsgehalt von etwa 25 bis 40 Gew.-%, bezogen auf das Gesamtgewicht des Miscanthus, auf. Daher ist eine Verwendung von Miscanthus, der im Januar oder Februar geerntet wurde, bevorzugt. Auf diese Weise wird das Zeitfenster für die Ernte des Miscanthus erweitert. Die Möglichkeit der Nutzung von Miscanthus über einen größeren Jahreszeitraum macht auch dessen Anbau attraktiver. Ferner haben Landwirte im europäischen Raum im Januar und Februar viel Zeit zur Verfügung, die sie zur Ernte des Miscanthus einsetzen können. In einer bevorzugten Ausführungsform hat der Miscanthus in dem Gemisch daher einen Feuchtigkeitsgehalt von 25 bis 40 Gew.-%, vorzugsweise 30 bis 40 Gew.-%, bezogen auf das Gesamtgewicht des Miscanthus.

Miscanthus trocknet am Stengel, so dass der Feuchtigkeitsgehalt des Miscanthus im Laufe des Jahres sinkt. Bei einer Ernte in den Sommermonaten weist der Miscanthus in der Regel einen Feuchtigkeitsgehalt von etwa 10 bis 15 Gew.-%, bezogen auf das Gesamtgewicht des Miscanthus, auf. Bei diesem Feuchtigkeitsgehalt lässt sich Miscanthus gut lagern, wobei hinsichtlich der Lagerfähigkeit ein Feuchtigkeitsgehalt von etwa 10 Gew.-%, bezogen auf das Gesamtgewicht des Miscanthus, bevorzugt ist. Während der Lagerung wird Miscanthus zunehmend dunkler. Bei ausreichend langer Lagerung wird Miscanthus zu Humus.

In einer bevorzugten Ausführungsform hat die Pflanzenkohle in dem Gemisch einen Feuchtigkeitsgehalt von 20 bis 25 Gew.-%, bezogen auf das Gesamtgewicht der Pflanzenkohle. Pflanzenkohle wird nach ihrer Herstellung durch Pyrolyse mit Wasser besprüht, um ein Selbstentzünden der Pflanzenkohle zu verhindern. Die Pflanzenkohle kann so auf einen Feuchtigkeitsgehalt von 20 bis 25 Gew.-%, bezogen auf das Gesamtgewicht der Pflanzenkohle, eingestellt werden.

In einer bevorzugten Ausführungsform besteht das Gemisch aus 80 Gew.-% Miscanthus und 20 Gew.-% Pflanzenkohle, jeweils bezogen auf das Gesamtgewicht des Gemischs.

In einer bevorzugten Ausführungsform liegt der Miscanthus, das Napiergras und/oder die Rutenhirse in dem Gemisch in Form von Häckseln vor. Dies begünstigt das Aufschließen des Gemischs in dem Extruder. Der Miscanthus, das Napiergras und/oder die Rutenhirse kann vor dem Mischen mit der Pflanzenkohle zu Häckseln zerkleinert oder auch direkt in Form von Häckseln bereitgestellt werden.

In einer bevorzugten Ausführungsform ist der Miscanthus, das Napiergras und/oder die Rutenhirse entstaubt. Dies erleichtert die Handhabbarkeit des Miscanthus, des Napiergrases und/oder der Rutenhirse und trägt zu einer geringen Staubentwicklung des resultierenden Eistreuzusatzes bei.

In einer bevorzugten Ausführungsform umfasst das Gemisch weiter Schafwolle. Die Schafwolle liefert im Aufschluss Aminosäuren als Nährstoffe, die bei einer Weiterverwendung des gebrauchten Einstreuzusatzes als Düngemittel wertvoll sind. Die Aminosäuren können auch als Nährstoffe für Mikroorganismen, die in dem Einstreuzusatz vorhanden sein können, dienen.

In einer besonders bevorzugten Ausführungsform besteht das Gemisch aus 60 Gew.-% Miscanthus, 20 Gew.-% Pflanzenkohle und 20 Gew.-% Schafwolle, jeweils bezogen auf das Gesamtgewicht des Gemischs.

In einer bevorzugten Ausführungsform umfasst das Verfahren weiter: d) Trocknen des Einstreuzusatzes. Beim Aufschließen des Gemischs in dem Extruder entsteht zusätzlich Wasser. Daher kann es notwendig sein, den Einstreuzusatz nach dem Abkühlen zu trocknen. Das Trocknen wird vorzugsweise bei Umgebungstemperatur durchgeführt. Das Trocknen kann beispielsweise auf einem Siebband erfolgen. Das Trocknen wird vorzugsweise mit dem Kühlen des Einstreuzusatzes kombiniert, so dass die Schritte c) und d) zur gleichen Zeit durchgeführt werden.

In einer bevorzugten Ausführungsform wird der Einstreuzusatz solange getrocknet, bis er einen Feuchtigkeitsgehalt von 2 bis 25 Gew.-%, vorzugsweise 2 bis 10 Gew.-%, weiter bevorzugt 2 bis 5 Gew.-%, bezogen auf das Gesamtgewicht des Einstreuzusatzes, erreicht hat. Ein geringer Feuchtigkeitsgehalt des Einstreuzusatzes verhindert ein Zusammenklumpen der Fasern und trägt somit dazu bei, dass die Oberfläche des Einstreuzusatzes und die Homogenität des Gemischs aus Fasern von Miscanthus, Napiergras und/oder Rutenhirse und Fasern von Pflanzenkohle erhalten bleiben. Dementsprechend verbessert das Trocknen des Einstreuzusatzes sowohl die Adsorptionsfähigkeit des Einstreuzusatzes für Flüssigkeiten als auch die Handhabung des Einstreuzusatzes.

Ferner begünstigt ein geringer Feuchtigkeitsgehalt von bis zu 15 Gew.-%, bezogen auf das Gesamtgewicht des Einstreuzusatzes, die Lagerfähigkeit des Einstreuzusatzes. Der Einstreuzusatz zeichnet sich durch eine gute Haltbarkeit aus und ist beispielsweise in Form von Pellets mit einem Feuchtigkeitsgehalt von 2 bis 10 Gew.-%, bezogen auf das Gesamtgewicht des Einstreuzusatzes, über 4 Jahre lang haltbar. Der Einstreuzusatz ist bis zu seiner Verwendung möglichst trocken zu lagern, um die Eigenschaften des Einstreuzusatzes, insbesondere die hohe Adsorptionsfähigkeit des Einstreuzusatzes für Flüssigkeiten, zu erhalten.

Für ein Pelletieren des Einstreuzusatzes ist ein Feuchtigkeitsgehalt von 15 bis 20 Gew.-%, vorzugsweise von etwa 18 Gew.-%, bezogen auf das Gesamtgewicht des Einstreuzusatzes, bevorzugt. Daher muss der Einstreuzusatz für eine Weiterverarbeitung zu Pellets nach der Herstellung nicht oder nur wenig getrocknet werden. Die Pellets trocknen während ihrer Lagerung von selbst weiter aus und erreichen so den für die Lagerung vorteilhaften niedrigen Feuchtigkeitsgehalt.

In einer bevorzugten Ausführungsform ist der Extruder ein Doppelschneckenextruder. Ein Doppelschneckenextruder weist zwei Schnecken auf, die gleichläufig oder gegenläufig rotieren können. Der Einsatz eines Doppelschneckenextruders hat sich für das Aufschließen des Gemischs als besonders geeignet erwiesen.

In einem weiteren Aspekt betrifft die Erfindung einen Einstreuzusatz für die Tierhaltung, erhältlich durch das erfindungsgemäße Verfahren.

In einem weiteren Aspekt betrifft die Erfindung eine Verwendung des erfindungsgemäßen Einstreuzusatzes zum Herstellen einer Einstreu für ein Tier.

In einem weiteren Aspekt betrifft die Erfindung eine Verwendung des erfindungsgemäßen Einstreuzusatzes oder der erfindungsgemäßen Einstreu als Düngemittel, Gartensubstrat, Gartenmulch und/oder Dämmstoff.

Der Einstreuzusatzes oder die Einstreu kann vor oder nach dem bestimmungsgemäßen Gebrauch in der Tierhaltung als Düngemittel, Gartensubstrat, Gartenmulch und/oder Dämmstoff Verwendung finden.

Bei der Verwendung des Einstreuzusatzes oder der Einstreu als Düngemittel werden Nährstoffe gezielt in den Boden gebracht. Miscanthus ist beispielsweise reich an Mineralien. Der Nährstoffgehalt der Pflanzenkohle hängt davon ab, aus welchem Ausgangsmaterial die Pflanzenkohle hergestellt ist. Zusätzlich können die Pflanzenkohle, der Einstreuzusatz und/oder die Einstreu gezielt mit zusätzlichen Nährstoffen, insbesondere Mineralstoffen und Spurenelementen, versetzt sein. Die Verwendung des Einstreuzusatzes oder der Einstreu bietet den Vorteil nicht nur Nährstoffe, sondern auch Fasern, die als Strukturgeber dienen, in den Boden einzuführen. Dies führt zu einer homogenen Verteilung der Nährstoffe im Boden. Gleichzeitig wird der Boden dadurch aufgelockert und es wird ein höherer Gehalt an Sauerstoff aus der Luft erreicht. Die Nährstoffe sind Bestandteile der Fasern oder an der Pflanzenkohle adsorbiert. Dadurch erfolgt die Freisetzung in den Boden über einen längeren Zeitraum. Der Einstreuzusatz bzw. die Einstreu hat nach dem Einbringen in den Boden auch einen positiven Einfluss auf die Mykorrhiza-Sphäre sowie die Population von Tieren, insbesondere Regenwürmern, und von Mikroorganismen. Damit werden die Bodendurchlüftung und die Wasserspeicherkapazität des Bodens verbessert. Insgesamt werden durch die Verwendung des Einstreuzusatzes oder der Einstreu als Düngemittel die Bodenqualität und die Bodenfruchtbarkeit erhöht. Das Pflanzenwachstum, der Ertrag und die Qualität der Ernteprodukte steigen. Zudem ist der sehr geringe PAK-Gehalt des Einstreuzusatzes bzw. der Einstreu für dessen Verwendung als Düngemittel von Vorteil.

In einem weiteren Aspekt betrifft die Offenbarung daher ein Düngemittel, wobei das Düngemittel Fasern von Miscanthus, Napiergras und/oder Rutenhirse aufweist, wobei das Düngemittel weiter Fasern von Pflanzenkohle aufweist, wobei die Fasern eine Länge von 0,1 bis 20 mm haben, und wobei die Pflanzenkohle in dem Düngemittel einen Anteil von 5 bis 50 Gew.-%, bezogen auf das Gesamtgewicht des Düngemittels, hat. In einer bevorzugten Ausführungsform weist das Düngemittel Fasern von Miscanthus und Fasern von Pflanzenkohle auf.

Gartensubstrat ist eine Alternative zu herkömmlichem Mutterboden, der obersten und fruchtbarsten Schicht des Bodens. Für die Verwendung als Gartensubstrat weist der Einstreuzusatz oder die Einstreu vorzugsweise Fasern mit einer Größe von etwa 0,1 bis 0,5 mm, weiter bevorzugt von etwa 0,1 bis 0,2 mm, auf. Vorteilhaft ist die gute Adsorptionsfähigkeit des Einstreuzusatzes bzw. der Einstreu für Flüssigkeiten und die hohe Nährstoffdichte. Durch die Verwendung des Einstreuzusatzes oder der Einstreu als Gartensubstrat werden die Bodenqualität und die Bodenfruchtbarkeit erhöht. Des Weiteren ist der sehr geringe PAK-Gehalt des Einstreuzusatzes bzw. der Einstreu für dessen Verwendung als Gartensubstrat von Vorteil.

In einem weiteren Aspekt betrifft die Offenbarung daher ein Gartensubstrat, wobei das Gartensubstrat Fasern von Miscanthus, Napiergras und/oder Rutenhirse aufweist, wobei das Gartensubstrat weiter Fasern von Pflanzenkohle aufweist, wobei die Fasern eine Länge von 0,1 bis 20 mm haben, und wobei die Pflanzenkohle in dem Gartensubstrat einen Anteil von 5 bis 50 Gew.-%, bezogen auf das Gesamtgewicht des Gartensubstrats, hat. In einer bevorzugten Ausführungsform weist das Gartensubstrat Fasern von Miscanthus und Fasern von Pflanzenkohle auf. Gartenmulch (Mulch) dient zum Bedecken des Bodens und leistet einen wichtigen Beitrag zur langfristigen Bodenfruchtbarkeit und Bodenqualität in Gartenbau und Landwirtschaft. Durch die hohe Adsorptionsfähigkeit des Einstreuzusatzes bzw. der Einstreu für Flüssigkeiten wird bei dessen Verwendung als Gartenmulch bei Regen eine besonders stabile Schutzschicht aus dem Mulch gebildet, die das Regenwasser über einen längeren Zeitraum an den Boden abgibt. Der Einstreuzusatz bzw. die Einstreu schützt den Boden auch vor dem Auslaugen, indem über einen längeren Zeitraum Nährstoffe aus dem Mulch in den Boden abgegeben werden. Des Weiteren ist der sehr geringe PAK-Gehalt des Einstreuzusatzes bzw. der Einstreu für dessen Verwendung als Gartenmulch von Vorteil.

In einem weiteren Aspekt betrifft die Offenbarung daher einen Gartenmulch, wobei der Gartenmulch Fasern von Miscanthus, Napiergras und/oder Rutenhirse aufweist, wobei der Gartenmulch weiter Fasern von Pflanzenkohle aufweist, wobei die Fasern eine Länge von 0,1 bis 20 mm haben, und wobei die Pflanzenkohle in dem Gartenmulch einen Anteil von 5 bis 50 Gew.-%, bezogen auf das Gesamtgewicht des Gartenmulchs, hat. In einer bevorzugten Ausführungsform weist der Gartenmulch Fasern von Miscanthus und Fasern von Pflanzenkohle auf.

Dämmstoffe dienen zur Wärme- und/oder Schalldämmung. Der Einstreuzusatz oder die Einstreu können als Dämmstoffe aus nachwachsenden Rohstoffen (Naturdämmstoffe) verwendet werden, wobei von Vorteil ist, dass sie Feuchtigkeit sehr gut aufnehmen und sehr schnell wieder abgeben, ohne dass die Dämmwirkung verloren geht. Der Einstreuzusatz bzw. die Einstreu weisen zudem eine sehr geringe Schadstoffbelastung auf und sind einfach zu entsorgen.

In einem weiteren Aspekt betrifft die Offenbarung daher einen Dämmstoff, wobei der Dämmstoff Fasern von Miscanthus, Napiergras und/oder Rutenhirse aufweist, wobei der Dämmstoff weiter Fasern von Pflanzenkohle aufweist, wobei die Fasern eine Länge von 0,1 bis 20 mm haben, und wobei die Pflanzenkohle in dem Dämmstoff einen Anteil von 5 bis 50 Gew.-%, bezogen auf das Gesamtgewicht des Dämmstoffs, hat. In einer bevorzugten Ausführungsform weist der Dämmstoff Fasern von Miscanthus und Fasern von Pflanzenkohle auf.

### Beispiele

### Beispiel 1: Herstellung eines Einstreuzusatzes für die Tierhaltung

8 kg entstaubte Miscanthus-Häcksel mit einem natürlichen Feuchtigkeitsgehalt von etwa 30 Gew.-%, bezogen auf das Gesamtgewicht des Miscanthus, und 2 kg Pflanzenkohle aus Kakaoschalen mit einem Feuchtigkeitsgehalt von etwa 20 Gew.-%, bezogen auf das Gesamtgewicht der Pflanzenkohle, werden bei Umgebungstemperatur über Förderdosierbänder in einen Mischer eingebracht und dort gemischt. Das Gemisch wird einem Doppelschneckenextruder zugeführt. Bei einer Temperatur von 90 °C wird das Gemisch in dem Doppelschneckenextruder für 20 min durch Bewegung der Doppelschnecken einer Druckphase von über 2 bar ausgesetzt. Eine Entspannungsphase, in denen die Doppelschnecken sich nicht bewegen, von 10 min schließt sich an. Dieser Druck- und Entspannungszyklus wird zehnmal bei gleicher Temperatur wiederholt. Der dabei erhaltene Einstreuzusatz ist ein homogenes Gemisch aus Fasern von Miscanthus und Fasern von Pflanzenkohle, wobei der Miscanthus und die Pflanzenkohle sehr gut faserig aufgeschlossen sind. Die Faserlänge beträgt 0,1 bis 16 mm. Der Einstreuzusatz wird auf einem Kühlband innerhalb von wenigen Minuten auf Umgebungstemperatur abgekühlt und bei Umgebungstemperatur auf einem Siebband für 12 Stunden getrocknet.

### Beispiel 2: Pelletierung und Verpackung des Einstreuzusatzes aus Beispiel 1

Der Einstreuzusatz aus Beispiel 1 wird einer Pelletiermaschine zugeführt. Beim Pelletieren wird der Einstreuzusatz durch Matrizen zu Pellets in Zylinderform mit einer Länge von 20 mm und einem Durchmesser von 8 mm gepresst. Es werden feste Pellets, die nicht zerbrechen und daher keine Staubentwicklung zeigen, erhalten. Die Pellets werden schließlich in Säcke zu 8 kg oder 15 kg, in Ballen zu 20 kg oder 25 kg oder in BigBags zu 550 kg verpackt.

### Beispiel 3: Weitere Gemische zur Herstellung eines Einstreuzusatzes für die Tierhaltung wie in Beispiel 1 beschrieben

### Gemisch 1

60 Gew.-% Miscanthus
40 Gew.-% Pflanzenkohle
(Gew.-% jeweils bezogen auf das Gesamtgewicht des Gemischs)

### Gemisch 2

90 Gew.-% Miscanthus
10 Gew.-% Pflanzenkohle
(Gew.-% jeweils bezogen auf das Gesamtgewicht des Gemischs)

### Gemisch 3

60 Gew.-% Miscanthus
20 Gew.-% Pflanzenkohle
20 Gew.-% Schafwolle
(Gew.-% jeweils bezogen auf das Gesamtgewicht des Gemischs)

### Gemisch 4

80 Gew.-% Napiergras
20 Gew.-% Pflanzenkohle
(Gew.-% jeweils bezogen auf das Gesamtgewicht des Gemischs)

### Gemisch 5

80 Gew.-% Rutenhirse
20 Gew.-% Pflanzenkohle
(Gew.-% jeweils bezogen auf das Gesamtgewicht des Gemischs)

Der Miscanthus, das Napiergras und die Rutenhirse können jeweils in Form von Häckseln, Pellets und/oder Granulat eingesetzt werden.

Die Herstellung der Einstreuzusätze erfolgt wie in Beispiel 1 beschrieben. Die Einstreuzusätze können wie in Beispiel 2 beschrieben pelletiert und verpackt werden.

### Beispiel 4: Verwendung des Einstreuzusatzes zum Herstellen einer Einstreu für ein Pferd

### Pferdeeinstreu 1

Zur Herstellung der Einstreu werden 60 Gew.-% entstaubte Miscanthus-Häcksel mit einer Länge von 50 bis 120 mm mit 40 Gew.-% Pellets aus Einstreuzusatz und Miscanthus, jeweils bezogen auf das Gesamtgewicht der Einstreu, gemischt. Die Pellets haben eine zylindrische Form und sind aus einem Gemisch von 80 Gew.-% Miscanthus-Häckseln und 20 Gew.-% Einstreuzusatz aus Beispiel 1, jeweils bezogen auf das Gesamtgewicht der Pellets, hergestellt. Die Pellets haben eine Länge von 10 bis 30 mm einen Durchmesser von 6 bis 8 mm.

### Pferdeeinstreu 2

Zur Herstellung der Einstreu werden 70 Gew.-% entstaubte Miscanthus-Häcksel mit einer Länge von 50 bis 120 mm mit 30 Gew.-% Pellets aus Einstreuzusatz und Miscanthus, jeweils bezogen auf das Gesamtgewicht der Einstreu, gemischt. Die Pellets haben eine zylindrische Form und sind aus einem Gemisch von 80 Gew.-% Miscanthus-Häckseln und 20 Gew.-% Einstreuzusatz aus Beispiel 1, jeweils bezogen auf das Gesamtgewicht der Pellets, hergestellt. Die Pellets haben eine Länge von 10 bis 30 mm einen Durchmesser von 6 bis 8 mm.

### Pferdeeinstreu 3

Zur Herstellung der Einstreu werden 60 Gew.-% entstaubte Miscanthus-Häcksel mit einer Länge von 50 bis 120 mm mit 40 Gew.-% entstaubtem Granulat aus Einstreuzusatz und Miscanthus, jeweils bezogen auf das Gesamtgewicht der Einstreu, gemischt. Das Granulat ist aus einem Gemisch von 80 Gew.-% Miscanthus-Häckseln und 20 Gew.-% Einstreuzusatz aus Beispiel 1, jeweils bezogen auf das Gesamtgewicht des Granulats, hergestellt. Die Körner des Granulats haben einen Durchmesser von 6 bis 12 mm.

### Pferdeeinstreu 4

Zur Herstellung der Einstreu werden 60 Gew.-% entstaubte Miscanthus-Häcksel mit einer Länge von 50 bis 120 mm mit 40 Gew.-% entstaubtem Granulat aus Einstreuzusatz und Miscanthus, jeweils bezogen auf das Gesamtgewicht der Einstreu, gemischt. Das Granulat ist aus einem Gemisch von 50 Gew.-% Miscanthus-Häckseln und 50 Gew.-% Einstreuzusatz aus Beispiel 1, jeweils bezogen auf das Gesamtgewicht des Granulats, hergestellt. Die Körner des Granulats haben einen Durchmesser von 6 bis 12 mm.

### Beispiel 5: Verwendung des Einstreuzusatzes zum Herstellen einer Einstreu für einen Hamster

### Hamstereinstreu 1

Zur Herstellung der Einstreu werden 60 Gew.-% entstaubte Miscanthus-Häcksel mit einer Länge von 3 bis 30 mm mit 40 Gew.-% entstaubtem Granulat aus Einstreuzusatz und Miscanthus, jeweils bezogen auf das Gesamtgewicht der Einstreu, gemischt. Das Granulat ist aus einem Gemisch von 80 Gew.-% Miscanthus-Häckseln und 20 Gew.-% Einstreuzusatz aus Beispiel 1, jeweils bezogen auf das Gesamtgewicht des Granulats, hergestellt. Die Körner des Granulats haben einen Durchmesser von 3 bis 6 mm.

### Hamstereinstreu 2

Zur Herstellung der Einstreu werden 70 Gew.-% entstaubte Miscanthus-Häcksel mit einer Länge von 3 bis 30 mm mit 30 Gew.-% entstaubtem Granulat aus Einstreuzusatz und Miscanthus, jeweils bezogen auf das Gesamtgewicht der Einstreu, gemischt. Das Granulat ist aus einem Gemisch von 80 Gew.-% Miscanthus-Häckseln und 20 Gew.-% Einstreuzusatz aus Beispiel 1, jeweils bezogen auf das Gesamtgewicht des Granulats, hergestellt. Die Körner des Granulats haben einen Durchmesser von 3 bis 6 mm.

### Beispiel 6: Weitere Zusammensetzungen für Einstreu für die Tierhaltung mit dem Einstreuzusatz aus Beispiel 1

### Einstreu 1

30-70 Gew.-% Miscanthus-Häcksel
10-30 Gew.-% Einstreuzusatz aus Beispiel 1
30-60 Gew.-% Miscanthusgranulat
(Gew.-% jeweils bezogen auf das Gesamtgewicht der Einstreu)

### Einstreu 2

60 Gew.-% Miscanthus-Häcksel
10 Gew.-% Einstreuzusatz aus Beispiel 1 in Form von Granulat
30 Gew.-% Miscanthusgranulat
(Gew.-% jeweils bezogen auf das Gesamtgewicht der Einstreu)

### Einstreu 3

70 Gew.-% Miscanthus-Häcksel
10 Gew.-% Einstreuzusatz aus Beispiel 1 in Form von Granulat
20 Gew.-% Miscanthusgranulat
(Gew.-% jeweils bezogen auf das Gesamtgewicht der Einstreu)

### Einstreu 4

50-70 Gew.-% Miscanthus-Pellets
30-50 Gew.-% Einstreuzusatz aus Beispiel 1
(Gew.-% jeweils bezogen auf das Gesamtgewicht der Einstreu)

### Einstreu 5

50-70 Gew.-% Miscanthus-Häcksel
30-50 Gew.-% Einstreuzusatz aus Beispiel 1
(Gew.-% jeweils bezogen auf das Gesamtgewicht der Einstreu)

### Einstreu 6

70 Gew.-% Miscanthus-Häcksel
30 Gew.-% Einstreuzusatz aus Beispiel 1 in Form von Granulat
(Gew.-% jeweils bezogen auf das Gesamtgewicht der Einstreu)

### Einstreu 7

50-60 Gew.-% Miscanthus in Form von Häckseln oder aufgebrochenen Pellets
30-40 Gew.-% Einstreuzusatz aus Beispiel 1
10 Gew.-% Schafwolle
(Gew.-% jeweils bezogen auf das Gesamtgewicht der Einstreu)

### Einstreu 8

40-50 Gew.-% Miscanthus-Häcksel
20-30 Gew.-% Einstreuzusatz aus Beispiel 1
20-40 Gew.-% Kakaoschalen
(Gew.-% jeweils bezogen auf das Gesamtgewicht der Einstreu)

### Einstreu 9

50-60 Gew.-% Miscanthus-Häcksel
30-40 Gew.-% Einstreuzusatz aus Beispiel 1
10 Gew.-% effektive Mikroorganismen
(Gew.-% jeweils bezogen auf das Gesamtgewicht der Einstreu)

### Einstreu 10

55-65 Gew.-% Miscanthus in Form von Häckseln oder aufgebrochenen Pellets
32-42 Gew.-% Einstreuzusatz aus Beispiel 1
3 Gew.-% Eukalyptusöl
(Gew.-% jeweils bezogen auf das Gesamtgewicht der Einstreu)

### Einstreu 11

40-70 Gew.-% Pellets, die aus 60-70 Gew.-% Miscanthus-Häcksel und 30-40 Gew.-% Einstreuzusatz aus Beispiel 1, jeweils bezogen auf das Gesamtgewicht der Pellets, bestehen
30-60 Gew.-% Stroh
(Gew.-% jeweils bezogen auf das Gesamtgewicht der Einstreu)

### Beispiel 7: Herstellung eines Einstreuzusatzes zur Verwendung als Düngemittel

Zur Herstellung eines Einstreuzusatzes zur Verwendung als Düngemittel wird ein Gemisch aus 62,5 Gew.-% Miscanthus, 6,2 Gew.-% Pflanzenkohle aus Holz und 31,3 Gew.-% Schafwolle, jeweils bezogen auf das Gesamtgewicht des Gemischs, bereitgestellt und dem Aufschluss wie in Beispiel 1 beschrieben unterzogen. Das dabei erhaltene Düngemittel ist ein homogenes Gemisch aus Fasern von Miscanthus, Fasern von Pflanzenkohle und Fasern von Schafwolle. Die Faserlänge beträgt 0,1 bis 16 mm. Das Düngemittel wird auf einem Kühlband auf Umgebungstemperatur abgekühlt und bei Umgebungstemperatur durch Ausdünstung getrocknet.

## Patentansprüche

1. Verfahren zur Herstellung eines Einstreuzusatzes für die Tierhaltung, das Verfahren umfassend die Schritte:
a) Bereitstellen eines Gemischs, das Miscanthus, Napiergras und/oder Rutenhirse umfasst, und das weiter Pflanzenkohle umfasst, wobei das Gemisch einen Feuchtigkeitsgehalt von 20 bis 40 Gew.-%, bezogen auf das Gesamtgewicht des Gemischs, hat, und wobei die Pflanzenkohle in dem Gemisch einen Anteil von 5 bis 50 Gew.-%, bezogen auf das Gesamtgewicht des Gemischs, hat,
b) Aufschließen des Gemischs in einem Extruder, der eingerichtet ist, das Gemisch zu Fasern mit einer Länge von 0,1 bis 20 mm zu verarbeiten, wobei die Fasern den Einstreuzusatz bilden, bei einer Temperatur von 60 bis 100 °C, und
c) Kühlen des Einstreuzusatzes auf 10 bis 25 °C.

2. Verfahren gemäß Anspruch 1, wobei das Aufschließen des Gemischs in dem Extruder bei einer Temperatur von 70 bis 100 °C, vorzugsweise von 75 bis 95 °C, weiter bevorzugt von 80 bis 95 °C erfolgt.

3. Verfahren gemäß Anspruch 1 oder 2, wobei der Druck, der während des Aufschließens des Gemischs in dem Extruder entsteht und auf das Gemisch wirkt, größer als 2 bar ist.

4. Verfahren gemäß einem der Ansprüche 1 bis 3, wobei das Gemisch einen Feuchtigkeitsgehalt von 25 bis 40 Gew.-%, vorzugsweise von 30 bis 40 Gew.-%, weiter bevorzugt von 40 Gew.-%, bezogen auf das Gesamtgewicht des Gemischs, hat.

5. Verfahren gemäß einem der Ansprüche 1 bis 4, wobei das Gemisch Miscanthus und Pflanzenkohle umfasst und der Feuchtigkeitsgehalt des Gemischs durch einen natürlichen Feuchtigkeitsgehalt des Miscanthus und/oder der Pflanzenkohle gegeben ist und/oder durch Zugeben von Wasser zu dem Miscanthus, der Pflanzenkohle und/oder dem Gemisch erreicht wird.

6. Verfahren gemäß Anspruch 5, wobei der Miscanthus in dem Gemisch einen Feuchtigkeitsgehalt von 25 bis 40 Gew.-%, vorzugsweise 30 bis 40 Gew.-%, bezogen auf das Gesamtgewicht des Miscanthus, hat.

7. Verfahren gemäß einem der Ansprüche 1 bis 6, wobei die Pflanzenkohle aus Kakaoschalen hergestellt ist.

8. Verfahren gemäß einem der Ansprüche 1 bis 6, wobei die Pflanzenkohle aus Miscanthus hergestellt ist.

9. Verfahren gemäß einem der Ansprüche 1 bis 8, wobei das Gemisch weiter Schafwolle umfasst.

10. Verfahren gemäß einem der Ansprüche 1 bis 9, wobei das Verfahren weiter umfasst: d) Trocknen des Einstreuzusatzes.

11. Verfahren gemäß einem der Ansprüche 1 bis 10, wobei der Extruder ein Doppelschneckenextruder ist.

12. Einstreuzusatz für die Tierhaltung, erhältlich durch ein Verfahren gemäß einem der Ansprüche 1 bis 11.

13. Einstreu für die Tierhaltung mit einem Einstreuzusatz gemäß Anspruch 12.

14. Verwendung eines Einstreuzusatzes gemäß Anspruch 12 zum Herstellen einer Einstreu für ein Tier.

15. Verwendung des Einstreuzusatzes gemäß Anspruch 12 oder der Einstreu gemäß Anspruch 13 als Düngemittel, Gartensubstrat, Gartenmulch und/oder Dämmstoff.

## Claims

1. A method for the production of a bedding admixture for animal keeping, the method comprising the steps of:
a) providing a mixture comprising miscanthus, napier grass and/or switchgrass, and further comprising biochar, wherein the mixture has a moisture content of 20 to 40% by weight based on the total weight of the mixture, and wherein the biochar in the mixture has a proportion of 5 to 50% by weight based on the total weight of the mixture,
b) open up the mixture in an extruder configured to process the mixture into fibres having a length of 0.1 to 20 mm, the fibres constituting the bedding admixture, at a temperature of 60 to 100°C, and
c) cooling the bedding admixture to 10 to 25°C.

2. The method according to claim 1, wherein the mixture is opened up in the extruder at a temperature of 70 to 100°C, preferably of 75 to 95°C, more preferred of 80 to 95°C.

3. The method according to claim 1 or 2, wherein the pressure that develops in the extruder while the mixture is opened up and that acts on the mixture is greater than 2 bar.

4. The method according to any one of claims 1 to 3, wherein the mixture has a moisture content of 25 to 40% by weight, preferably of 30 to 40% by weight, more preferred of 40% by weight, based on the total weight of the mixture.

5. The method according to any one of claims 1 to 4, wherein the mixture comprises miscanthus and biochar and the moisture content of the mixture is given by a natural moisture content of the miscanthus and/or the biochar and/or is achieved by adding water to the miscanthus, the biochar, and/or the mixture.

6. The method according to claim 5, wherein the miscanthus in the mixture has a moisture content of 25 to 40% by weight, preferably of 30 to 40% by weight, based on the total weight of the miscanthus.

7. The method according to any one of claims 1 to 6, wherein the biochar is produced from cocoa shells.

8. The method according to any one of claims 1 to 6, wherein the biochar is produced from miscanthus.

9. The method according to any one of claims 1 to 8, wherein the mixture further comprises sheep's wool.

10. The method according to any one of claims 1 to 9, wherein the method further comprises: d) drying the bedding admixture.

11. The method according to any one of claims 1 to 10, wherein the extruder is a twin-screw extruder.

12. A bedding admixture for animal keeping obtainable by the method according to any one of claims 1 to 11.

13. A bedding for animal keeping including a bedding admixture according to claim 12.

14. Use of a bedding admixture according to claim 12 for producing a bedding for an animal.

15. Use of the bedding admixture according to claim 12 or the bedding according to claim 13 as fertilizer, garden substrate, garden mulch and/or insulant.

## Revendications

1. Méthode de production d'un additif de litière pour l'élevage, la méthode comprenant les étapes:
a) fournir un mélange qui comprend du miscanthus, de l'herbe napier et/ou du panic érigé, et qui comprend en outre du charbon végétal, le mélange ayant une teneur en humidité de 20 à 40% en poids, par rapport au poids total du mélange, et le charbon végétal dans le mélange constituant une fraction de 5-50% en poids, par rapport au poids total du mélange,
b) désagréger le mélange dans une extrudeuse qui est configurée pour transformer le mélange en fibres avec une longueur de 0,1 à 20 mm, les fibres formant l'additif de litière, à une température de 60 à 100°C, et
c) refroidir l'additif de litière à 10-25°C.

2. Méthode selon la revendication 1, dans laquelle la désagrégation du mélange dans l'extrudeuse a lieu à une température de 70 à 100°C, préférablement de 75 à 95°C, plus préférablement de 80 à 95 ° C.

3. Méthode selon la revendication 1 ou 2, dans laquelle la pression, qui est générée pendant la désagrégation du mélange dans l'extrudeuse et qui agit sur le mélange, est supérieure à 2 bars.

4. Méthode selon l'une quelconque des revendications 1 à 3, dans laquelle le mélange a une teneur en humidité de 25 à 40% en poids, préférablement de 30 à 40% en poids, plus préférablement de 40% en poids, par rapport au poids total du mélange.

5. Méthode selon l'une quelconque des revendications 1 à 4, dans laquelle le mélange comprend du miscanthus et du charbon végétal et la teneur en humidité du mélange est obtenue par une teneur en humidité naturelle du miscanthus et/ou du charbon végétal et/ou en ajoutant de l'eau au miscanthus, au charbon végétal et/ou au mélange.

6. Méthode selon la revendication 5, dans laquelle le miscanthus dans le mélange a une teneur en humidité de 25 à 40% en poids, préférablement de 30 à 40% en poids, par rapport au poids total du miscanthus.

7. Méthode selon l'une quelconque des revendications 1 à 6, dans laquelle le charbon végétal est produit à partir de coques de cacao.

8. Méthode selon l'une quelconque des revendications 1 à 6, dans laquelle le charbon végétal est produit à partir de miscanthus.

9. Méthode selon l'une quelconque des revendications 1 à 8, dans laquelle le mélange comprend en outre de la laine de mouton.

10. Méthode selon l'une quelconque des revendications 1 à 9, dans laquelle la méthode comprend en outre: d) sécher l'additif de litière.

11. Méthode selon l'une quelconque des revendications 1 à 10, dans laquelle l'extrudeuse est une extrudeuse à double vis.

12. Additif de litière pour l'élevage, susceptible d'être obtenu par une méthode selon l'une quelconque des revendications 1 à 11.

13. Litière pour l'élevage comprenant un additif de litière selon la revendication 12.

14. Utilisation d'un additif de litière selon la revendication 12 pour produire une litière pour animaux.

15. Utilisation de l'additif de litière selon la revendication 12 ou de la litière selon la revendication 13 en tant que engrais, substrat de jardin, paillis de jardin et/ou matériau isolant.
